# EUROPEAN PATENT APPLICATION

(11) **EP 4 129 513 A1**
(43) Date of publication of application: **08.02.2023**
(21) Application number: 22790430.7
(22) Date of filing: 18.05.2022
(51) Int. Cl.: B21D 19/08, B21D 28/34, B21D 43/14, B21D 45/02, H01M 50/533, H01M 50/557

(54) **LEAD TAB EDGE-ROUNDING APPARATUS FOR SECONDARY BATTERY**

(30) Priority: 18.05.2021 KR 20210064364
(71) Applicant: POLE CO., LTD., Cheongju-si, Chungcheongbuk-do 28122 (KR)
(72) Inventor: KIM, Ji Ho, Cheongju-si Chungcheongbuk-do 28616 (KR); LEE, Hoon Hee, Cheongju-si Chungcheongbuk-do 28115 (KR); KIM, Seong Goo, Cheongju-si Chungcheongbuk-do 28449 (KR)
(74) Representative: Scheele Jaeger Wetzel Patentanwälte
(86) International application number: PCT/KR2022/007136
(87) International publication number: WO 2022/245139

(57) **Abstract**

Disclosed is a processing apparatus for rounding an edge of a lead tab for a secondary battery, the processing apparatus including a loading unit on which a lead tab manufactured by a lead tab manufacturing apparatus is loaded and seated, a primary edge processing unit installed at a downstream side of the loading unit and configured to align the lead tab transferred from the loading unit, the primary edge processing unit being configured to round two opposite edges of one end of the metal lead disposed adjacent to an insulation film, a secondary edge processing unit installed at a downstream side of the primary edge processing unit and configured to align the lead tab transferred from the primary edge processing unit, the secondary edge processing unit being configured to round two opposite edges of the other end of the metal lead spaced apart from the insulation film, an unloading unit installed at a downstream side of the secondary edge processing unit and configured to load the lead tab transferred from the secondary edge processing unit and discharge the loaded lead tab to the outside, and a transfer unit configured to load the lead tab, which has the two opposite edges of one end and the two opposite edges of the other end of the metal lead that are to be processed, from the lead tab manufacturing apparatus to the loading unit and transfer the lead tab, which is loaded on the loading unit, to the primary edge processing unit, the secondary edge processing unit, and the unloading unit.

## Description

### [Technical Field]

The present disclosure relates to a processing apparatus for rounding an edge of a lead tab for a secondary battery, which is capable of rounding an edge of a lead tab for a secondary battery.

### [Background Art]

In general, a lead tab for a secondary battery is used as a connection terminal for an external circuit to operate a device or system that uses the secondary battery. To this end, the lead tab is connected to an electrode of the secondary battery.

A metal lead, which constitutes the lead tab, is manufactured to have a typical rectangular shape having an angled edge in a plan view. An insulation film is fused to two opposite surfaces of the metal lead and disposed at predetermined positions on the metal lead. The insulation film is made of synthetic resin to seal and insulate a casing of the secondary battery.

Meanwhile, because the edge of the metal lead of the lead tab is sharp, there is a problem in that the sharp edge of the metal lead causes scratches on the electrode when the lead tab is connected to the electrode of the secondary battery. This problem causes another problem of a deterioration in efficiency of the secondary battery.

### [Disclosure]

### [Technical Problem]

An object of the present disclosure is to provide a processing apparatus for rounding an edge of a lead tab for a secondary battery, which is capable of rounding an edge of a metal lead having two opposite surfaces to which an insulation film is fused.

### [Technical Solution]

One aspect of the present disclosure provides a processing apparatus for rounding an edge of a lead tab for a secondary battery, which rounds two opposite edges of one end and two opposite edges of the other end of a metal lead of a lead tab manufactured by a lead tab manufacturing apparatus, the processing apparatus including: a loading unit on which the lead tab manufactured by the lead tab manufacturing apparatus is loaded and seated; a primary edge processing unit installed at a downstream side of the loading unit and configured to align the lead tab transferred from the loading unit, the primary edge processing unit being configured to round the two opposite edges of one end of the metal lead disposed adj acent to an insulation film; a secondary edge processing unit installed at a downstream side of the primary edge processing unit and configured to align the lead tab transferred from the primary edge processing unit, the secondary edge processing unit being configured to round the two opposite edges of the other end of the metal lead spaced apart from the insulation film; an unloading unit installed at a downstream side of the secondary edge processing unit and configured to load the lead tab transferred from the secondary edge processing unit and discharge the loaded lead tab to the outside; and a transfer unit configured to load the lead tab, which has the two opposite edges of one end and the two opposite edges of the other end of the metal lead that are to be processed, from the lead tab manufacturing apparatus to the loading unit and transfer the lead tab, which is loaded on the loading unit, to the primary edge processing unit, the secondary edge processing unit, and the unloading unit.

In the processing apparatus for rounding an edge of a lead tab for a secondary battery according to one aspect of the present disclosure, the transfer unit may include: a first vacuum gripper configured to transfer the lead tab, which is manufactured by the lead tab manufacturing apparatus, to the loading unit; a second vacuum gripper configured to transfer the lead tab, which is loaded on the loading unit, to the primary edge processing unit; a third vacuum gripper configured to transfer the lead tab, which has the two opposite edges of one end of the metal lead that have been processed by the primary edge processing unit, to the secondary edge processing unit; and a fourth vacuum gripper configured to transfer the lead tab, which has the two opposite edges of the other end of the metal lead that have been processed by the secondary edge processing unit, to the unloading unit.

In the processing apparatus for rounding an edge of a lead tab for a secondary battery according to one aspect of the present disclosure, the loading unit may include: a station table on which the lead tab, which is transferred from the lead tab manufacturing apparatus by an operation of a first vacuum gripper of the transfer unit, is loaded and seated; and a vision camera installed to face an upper surface of the station table and configured to identify a seated state of the lead tab by acquiring an image of the lead tab seated on the station table.

In the processing apparatus for rounding an edge of a lead tab for a secondary battery according to one aspect of the present disclosure, the primary edge processing unit may include: a first alignment stage on which the lead tab, which is transferred from the loading unit by an operation of a second vacuum gripper of the transfer unit, is seated and aligned, the first alignment stage having a first stopper installed to protrude from one end of the first alignment stage facing the loading unit, the first stopper being configured to come into contact with one end of the metal lead in case of aligning the lead tab; a first end alignment cylinder configured to align one end and the other end of the metal lead with the first alignment stage by coming into contact with the other end of the metal lead and pushing the metal lead toward the first stopper in case of aligning the lead tab seated on the first alignment stage; a pair of first side alignment blocks configured to push two opposite sides of the metal lead toward two opposite surfaces of the first alignment stage and move the metal lead so that a center of the first alignment stage is coincident with a center of the metal lead in case of aligning the lead tab seated on the first alignment stage; and a pair of first notching molds configured to round the two opposite edges of one end of the metal lead of the lead tab that has been completely aligned with the first alignment stage.

In the processing apparatus for rounding an edge of a lead tab for a secondary battery according to one aspect of the present disclosure, the first alignment stage may be installed at a center of an upper surface of a first basal table extending in a direction perpendicularly intersecting a transfer direction of the lead tab in a plan view, the first alignment stage may include an upper surface on which the lead tab is seated and aligned, and the first alignment stage may extend in the transfer direction of the lead tab while having a width smaller than a width of the lead tab.

In the processing apparatus for rounding an edge of a lead tab for a secondary battery according to one aspect of the present disclosure, the first end alignment cylinder may be installed on the upper surface of the first basal table and faces the other end of the first alignment stage, a first end alignment block may be installed on the first end alignment cylinder, and the first end alignment block may come into contact with the other end of the metal lead and push and move the metal lead by being moved toward the other end of the first alignment stage by an operation of the first end alignment cylinder so that one end of the metal lead comes into contact with the first stopper in case of aligning the lead tab.

In the processing apparatus for rounding an edge of a lead tab for a secondary battery according to one aspect of the present disclosure, the first side alignment blocks may be installed on first sliders disposed with the first alignment stage interposed therebetween and configured to face one side surface and the other side surface of the first alignment stage, the first sliders may be slidably mounted on the upper surface of the first basal table, and the first side alignment blocks may simultaneously approach one side surface and the other side surface of the first alignment stage, come into contact with one side and the other side of the metal lead, push one side and the other side of the metal lead, and move the metal lead so that the center of the metal lead is coincident with the center of the first alignment stage in case of aligning the metal lead seated on the first alignment stage.

In the processing apparatus for rounding an edge of a lead tab for a secondary battery according to one aspect of the present disclosure, the first sliders may each be provided in the form of a plate extending vertically, lower ends of the first sliders may be slidably mounted on first guide rails installed on the upper surface of the first basal table and extending in a longitudinal direction of the first basal table, a first servo motor may be installed on the first basal table and disposed at one side of a rear side of the first sliders and move the first sliders and the first side alignment blocks installed on the first sliders, a first screw shaft may be connected to the first servo motor and extend in the longitudinal direction of the first basal table, the first screw shaft may be divided into a first screw region to which a rear side of one first slider disposed adjacent to the first servo motor is fastened, and a second screw region to which a rear side of the other first slider spaced apart from the first servo motor is fastened, and a screw thread of the first screw region and a screw thread of the second screw region may extend in opposite directions.

In the processing apparatus for rounding an edge of a lead tab for a secondary battery according to one aspect of the present disclosure, the first notching molds may be installed on the first sliders, respectively, the first notching molds may each include: a first die member having a die configured to round the edge of one end of the metal lead; a first punch member having a punch configured to round the edge of one end of the metal lead; and a first hydraulic cylinder configured to move the first punch member upward or downward, the first die members may be installed at front lower ends of the first sliders and face lower sides of the two opposite edges of one end of the metal lead aligned with the first alignment stage, the first punch members may be disposed on front surfaces of the first sliders and move upward or downward toward the first die members from positions above the metal lead aligned with the first alignment stage, the first hydraulic cylinder may be fixedly installed at upper ends of the first sliders, and the first hydraulic cylinder may be connected to the first punch members and move the first punch members upward or downward.

In the processing apparatus for rounding an edge of a lead tab for a secondary battery according to one aspect of the present disclosure, the secondary edge processing unit may include: a second alignment stage on which the lead tab, which is transferred from the primary edge processing unit by an operation of a third vacuum gripper of the transfer unit, is seated and aligned, the second alignment stage having a second stopper installed to protrude from the other end of the second alignment stage facing the unloading unit, the second stopper being configured to come into contact with the other end of the metal lead in case of aligning the lead tab; a second end alignment cylinder configured to align the other end and one end of the metal lead with the second alignment stage by coming into contact with one end of the metal lead and pushing the metal lead toward the second stopper in case of aligning the lead tab seated on the second alignment stage; a pair of second side alignment blocks configured to push two opposite sides of the metal lead toward two opposite surfaces of the second alignment stage and move the metal lead so that a center of the second alignment stage is coincident with a center of the metal lead in case of aligning the lead tab seated on the second alignment stage; and a pair of second notching molds configured to round the two opposite edges of the other end of the metal lead of the lead tab that has been completely aligned with the second alignment stage.

In the processing apparatus for rounding an edge of a lead tab for a secondary battery according to one aspect of the present disclosure, the second alignment stage may be installed at a center of an upper surface of a second basal table extending in a direction perpendicularly intersecting a transfer direction of the lead tab in a plan view, the second alignment stage may include an upper surface on which the lead tab is seated and aligned, and the second alignment stage may extend in the transfer direction of the lead tab while having a width smaller than a width of the lead tab.

In the processing apparatus for rounding an edge of a lead tab for a secondary battery according to one aspect of the present disclosure, the second end alignment cylinder may be installed on the upper surface of the second basal table and face one end of the second alignment stage, a second end alignment block may be installed on the second end alignment cylinder, and the second end alignment block may come into contact with one end of the metal lead and push and move the metal lead by being moved toward one end of the second alignment stage by an operation of the second end alignment cylinder so that the other end of the metal lead comes into contact with the second stopper in case of aligning the lead tab.

In the processing apparatus for rounding an edge of a lead tab for a secondary battery according to one aspect of the present disclosure, the second side alignment blocks may be installed on second sliders disposed with the second alignment stage interposed therebetween and configured to face one side surface and the other side surface of the second alignment stage, the second sliders may be slidably mounted on the upper surface of the second basal table, and the second side alignment blocks may simultaneously approach one side surface and the other side surface of the second alignment stage, come into contact with one side and the other side of the metal lead, push one side and the other side of the metal lead, and move the metal lead so that the center of the metal lead is coincident with the center of the second alignment stage in case of aligning the metal lead seated on the second alignment stage.

In the processing apparatus for rounding an edge of a lead tab for a secondary battery according to one aspect of the present disclosure, the second sliders may each be provided in the form of a plate extending vertically, lower ends of the second sliders may be slidably mounted on second guide rails installed on the upper surface of the second basal table and extending in a longitudinal direction of the second basal table, a second servo motor may be installed on the second basal table and disposed at one side of a front side of the second sliders and move the second sliders and the second side alignment blocks installed on the second sliders, a first screw shaft may be connected to the second servo motor and extend in the longitudinal direction of the second basal table, the second screw shaft may be divided into a first screw region to which a front side of one second slider disposed adjacent to the second servo motor is fastened, and a second screw region to which a front side of the other second slider spaced apart from the second servo motor is fastened, and a screw thread of the first screw region and a screw thread of the second screw region may extend in opposite directions.

In the processing apparatus for rounding an edge of a lead tab for a secondary battery according to one aspect of the present disclosure, the second notching molds may be installed on the second sliders, respectively, the second notching molds may each include: a second die member having a die configured to round the edge of the other end of the metal lead; a second punch member having a punch configured to round the edge of the other end of the metal lead; and a second hydraulic cylinder configured to move the second punch member upward or downward, the second die members may be installed at rear lower ends of the second sliders and face lower side of the two opposite edges of the other end of the metal lead aligned with the second alignment stage, the second punch members may be disposed on rear surfaces of the second sliders and move upward or downward toward the second die members from positions above the metal lead aligned with the second alignment stage, the second hydraulic cylinders may be fixedly installed at upper ends of the second sliders, and the second hydraulic cylinders may be connected to the second punch members and move the second punch members upward or downward.

In the processing apparatus for rounding an edge of a lead tab for a secondary battery according to one aspect of the present disclosure, the unloading unit may include: an unloading table provided in the form of a horizontal circular plate and configured to load the lead tab, which is transferred from the secondary edge processing unit by an operation of a fourth vacuum gripper of the transfer unit, and discharge the lead tab to the outside; and a rotary motor installed at a center of a lower portion of the unloading table and configured to rotate the unloading table, a plurality of trays may be installed on an upper surface of the unloading table, the lead tab transferred from the secondary edge processing unit may be inserted and loaded into the tray, and the trays may be installed on the upper surface of the unloading table and spaced apart from one another at equal angular intervals.

### [Advantageous Effects]

According to the present disclosure, it is possible to automatically and continuously round the two opposite edges of one end and the two opposite edges of the other end of the metal lead having the two opposite surfaces to which the insulation film is fused.

### [Description of Drawings]

FIG. 1 is a view sequentially illustrating a lead tab processed by a processing apparatus for rounding an edge of a lead tab for a secondary battery according to the present disclosure.
FIG. 2 is a view schematically illustrating the processing apparatus for rounding an edge of a lead tab for a secondary battery according to the present disclosure.
FIG. 3 is a view schematically illustrating a primary edge processing unit illustrated in FIG. 2 when the primary edge processing unit is viewed from a loading unit.
FIG. 4 is a view when FIG. 3 is viewed from the rear side.
FIG. 5 is a view schematically illustrating a secondary edge processing unit illustrated in FIG. 2 when the secondary edge processing unit is viewed from an unloading unit.
FIG. 6 is a view when FIG. 5 is viewed from the rear side.

### [Modes of the Invention]

Hereinafter, an embodiment of a processing apparatus for rounding an edge of a lead tab for a secondary battery according to the present disclosure will be described in detail with reference to the drawings.

However, it should be noted that the intrinsic technical spirit of the present disclosure is not limited by the following exemplary embodiment, and the following exemplary embodiment may easily be substituted or altered by those skilled in the art based on the intrinsic technical spirit of the present disclosure.

In addition, the terms used herein are selected for convenience of description and should be appropriately interpreted as a meaning that conform to the technical spirit of the present disclosure without being limited to a dictionary meaning when recognizing the intrinsic technical spirit of the present disclosure.

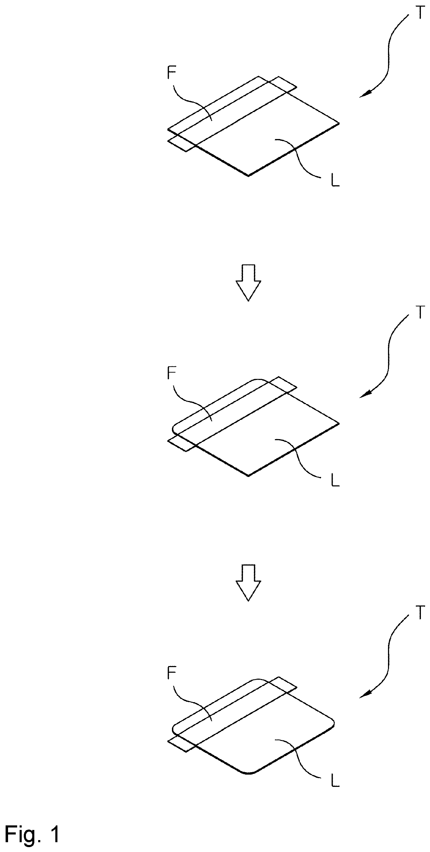

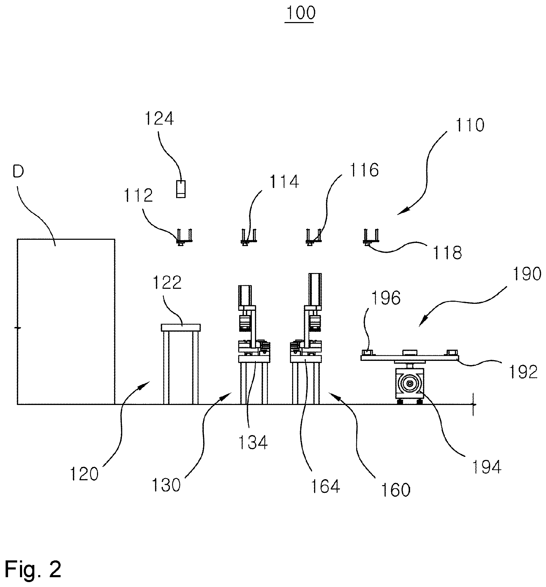

A processing apparatus 100 (see FIG. 2) for rounding an edge of a lead tab for a secondary battery according to the present disclosure is installed at a downstream side of a lead tab manufacturing apparatus D (see FIG. 2) and rounds an edge portion of a metal lead L (see FIG. 1) of a lead tab T (see FIG. 1) manufactured by the lead tab manufacturing apparatus D.

In this case, as can be seen by anyone, the lead tab manufacturing apparatus D includes: an unwinding process of supplying a metal lead L wound in the form of a roll; a flattening process of flattening front and back surfaces of the supplied metal lead L; an insulation film fusion process of fusing an insulation film F (see FIG. 1) to upper and lower surfaces of the metal lead L at a preset interval in a longitudinal direction of the metal lead L; a metal lead cutting process of forming a lead tab T by cutting the metal lead L, to which the insulation film is fused, into a preset length; and an inspection process of inspecting a dimension and an external shape of the lead tab T formed by the metal lead cutting process.

Further, the lead tab T, which has been subjected to the inspection process, is transferred to a discharge end of the lead tab manufacturing apparatus D that faces the processing apparatus according to the present disclosure.

Meanwhile, as illustrated in FIG. 1, the processing apparatus 100 for rounding an edge of a lead tab for a secondary battery according to the present disclosure rounds two opposite edges of one end of the metal lead L disposed adjacent to the insulation film F and two opposite edges of the other end of the metal lead L spaced apart from the insulation film F.

FIG. 1 illustrates that the two opposite edges of one end of the metal lead L are processed first, and then the two opposite edges of the other end of the metal lead L are processed. However, the two opposite edges of the other end of the metal lead L may be processed, and then the two opposite edges of one end of the metal lead L may be processed.

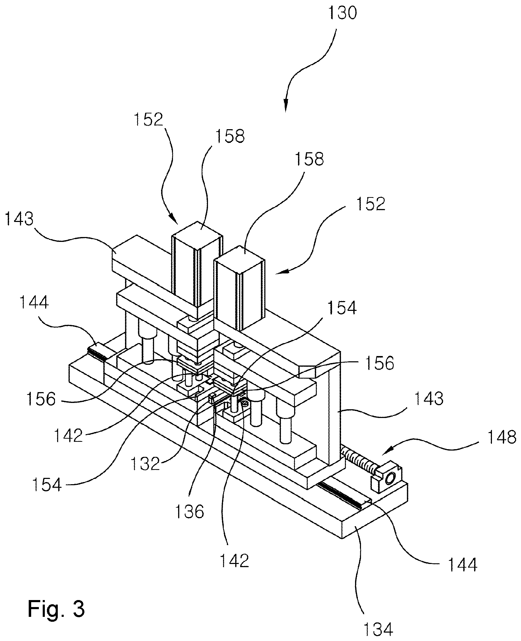

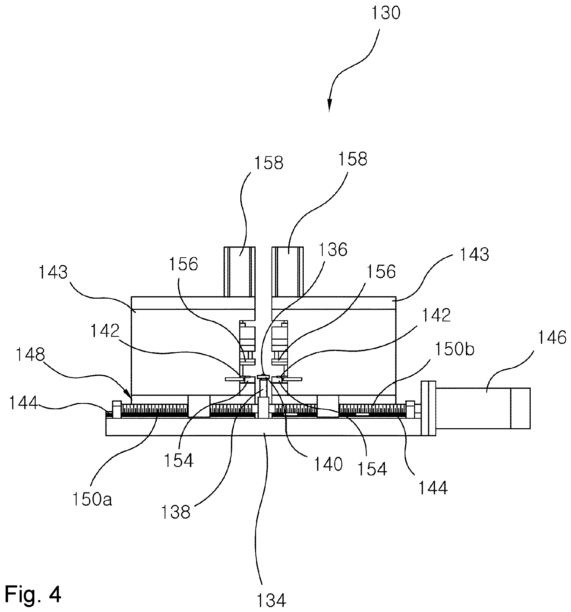

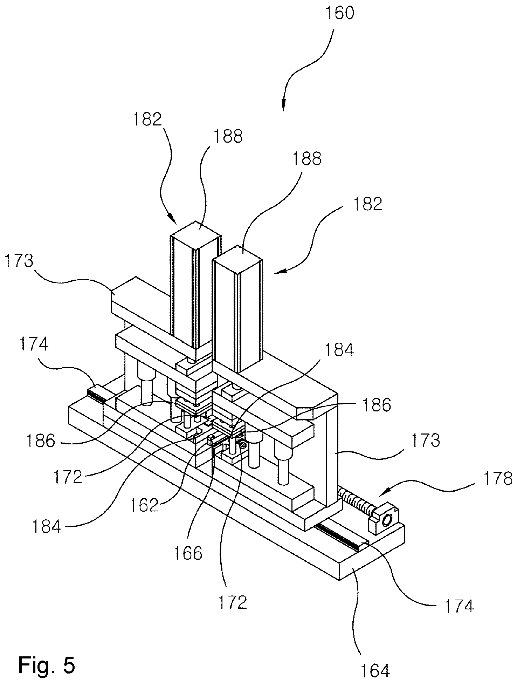

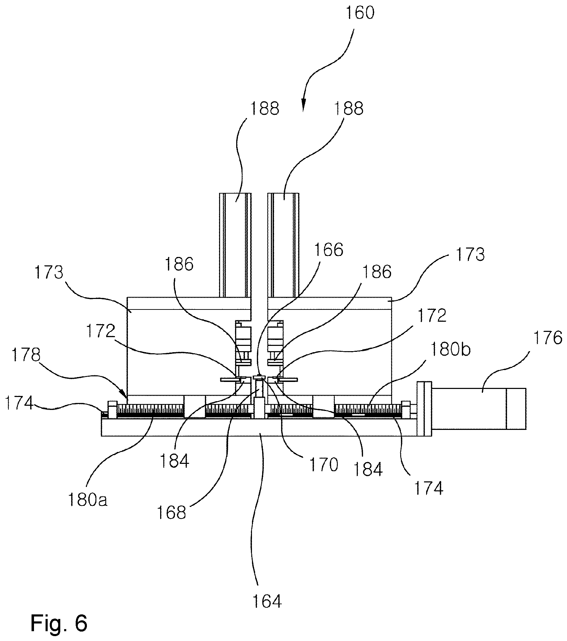

FIGS. 2 to 6, among the accompanying drawings, are views schematically illustrating the processing apparatus for rounding an edge of a lead tab for a secondary battery according to the present disclosure.

Referring to FIGS. 2 to 6, the processing apparatus 100 for rounding an edge of a lead tab for a secondary battery according to the present disclosure includes a loading unit 120, a primary edge processing unit 130, a secondary edge processing unit 160, and an unloading unit 190.

In addition, the processing apparatus 100 for rounding an edge of a lead tab for a secondary battery according to the present disclosure may further include a transfer unit 110.

First, the transfer unit 110 loads the lead tab T, which has the edge of the metal lead L to be processed, to the loading unit 120 and transfers the lead tab T, which is loaded on the loading unit 120, to the primary edge processing unit 130, the secondary edge processing unit 160, and the unloading unit 190.

The transfer unit 110 includes first, second, third, and fourth vacuum grippers 112, 114, 116, and 118 connected to a typical vacuum generator (not illustrated).

As can be seen by anyone, the first, second, third, and fourth vacuum grippers 112, 114, 116, and 118 suck the lead tab T by using vacuum pressure provided from the vacuum generator. When the vacuum pressure is eliminated, the first, second, third, and fourth vacuum grippers 112, 114, 116, and 118 release the sucked lead tab T.

Meanwhile, the first vacuum gripper 112 is installed to move upward or downward and rectilinearly reciprocate in a horizontal direction between the discharge end and the loading unit 120 of the lead tab manufacturing apparatus D. The second vacuum gripper 114 is installed to move upward or downward and rectilinearly reciprocate in the horizontal direction between the primary edge processing unit 130 and the loading unit 120.

Further, the third vacuum gripper 116 is installed to move upward or downward and rectilinearly reciprocate in the horizontal direction between the secondary edge processing unit 160 and the primary edge processing unit 130. The fourth vacuum gripper 118 is installed to move upward or downward and rectilinearly reciprocate in the horizontal direction between the unloading unit 190 and the secondary edge processing unit 160.

That is, the first vacuum gripper 112 sucks the lead tab T at the discharge end of the lead tab manufacturing apparatus D and places the lead tab T on the loading unit 120. The second vacuum gripper 114 sucks the lead tab T seated on the loading unit 120 and places the lead tab T on the primary edge processing unit 130.

Further, the third vacuum gripper 116 sucks the lead tab T, which has the two opposite edges of one end of the metal lead L that have been processed by the primary edge processing unit 130, and places the lead tab T on the secondary edge processing unit 160. The fourth vacuum gripper 118 sucks the lead tab T, which has the two opposite edges of the other end of the metal lead L that have been processed by the secondary edge processing unit 160, and places the lead tab T on the unloading unit 190.

In this case, because the configuration in which the first, second, third, and fourth vacuum grippers 112, 114, 116, and 118 suck the lead tab T and place the lead tab T and the configuration in which the first, second, third, and fourth vacuum grippers 112, 114, 116, and 118 move upward or downward and rectilinearly reciprocate in the horizontal direction are publicly-known technologies, a detailed description thereof will be omitted.

Further, the first, second, third, and fourth vacuum grippers 112, 114, 116, and 118 are installed to simultaneously reciprocate rectilinearly in the horizontal direction by using driving power provided from a single driving source (not illustrated) in order to reduce a tact time for processing the edge of the metal lead L.

The lead tab T, which has the two opposite edges of one end and the two opposite edges of the other end of the metal lead L to be processed, is loaded and seated on the loading unit 120.

The loading unit 120 includes a station table 122 on which the lead tab T, which is transferred by an operation of the first vacuum gripper 112, is loaded and seated.

As illustrated, the station table 122 is provided in the form of a flat plate having a sufficient area so that the lead tab T may be loaded and seated on the station table 122. The lead tab T, which is transferred from the discharge end of the lead tab manufacturing apparatus D by the operation of the first vacuum gripper 112, is loaded and seated on an upper surface of the station table 122.

Meanwhile, the loading unit 120 further includes a vision camera 124 capable of identifying a seated state of the lead tab T by acquiring an image of the lead tab T seated on the station table 132.

The vision camera 124 is installed to face the upper surface of the station table 122 so as not to interfere with the operation of the first vacuum gripper 112.

In this case, because the configuration in which the image acquired by the vision camera 124 is used to identify the seated state of the lead tab T is a publicly-known technology, a detailed description thereof will be omitted.

The primary edge processing unit 130 is installed at a downstream side of the loading unit 120. The primary edge processing unit 130 aligns the lead tab T transferred from the loading unit 120 and rounds the two opposite edges of one end of the metal lead L disposed adjacent to the insulation film F.

The primary edge processing unit 130 includes a first alignment stage 132, a first end alignment cylinder 138, a pair of first side alignment blocks 142, and a pair of first notching molds 152.

The lead tab T, which is transferred from the loading unit 120 by an operation of the second vacuum gripper 114, is loaded on the first alignment stage 132 and aligned by the first alignment stage 132.

The first alignment stage 132 is installed at a center of an upper surface of a first basal table 134 extending in a direction perpendicularly intersecting a transfer direction of the lead tab T in a plan view.

In this case, the first alignment stage 132 has a flat, smooth upper surface on which the lead tab T is seated and slides. The first alignment stage 132 extends in the transfer direction of the lead tab T while having a width smaller than a width of the lead tab T.

Further, a first stopper 136 is installed to protrude from the upper surface of the first alignment stage 132 disposed adjacent to the loading unit 120. The lead tab T seated on the upper surface of the first alignment stage 132 is aligned as one end of the metal lead L comes into contact with the first stopper 136.

In case of aligning the lead tab T seated on the first alignment stage 132, the first end alignment cylinder 138 comes into contact with the other end of the metal lead L and pushes the metal lead L toward the first stopper 136, such that one end and the other end of the metal lead L are aligned with the first alignment stage 132.

To this end, the first end alignment cylinder 138 is installed on the upper surface of the first basal table 134 and faces the other end of the first alignment stage 132.

Further, a first end alignment block 140 is installed on the first end alignment cylinder 138 and moved in the transfer direction of the lead tab T by an operation of the first end alignment cylinder 138.

In case of aligning the lead tab T seated on the first alignment stage 132, the first end alignment block 140 comes into contact with the other end of the metal lead L and pushes and moves the metal lead L by being moved toward the other end of the first alignment stage 132 by the operation of the first end alignment cylinder 138 so that one end of the metal lead L comes into contact with the first stopper 136.

That is, one end and the other end of the metal lead L of the lead tab T seated on the first alignment stage 132 are aligned by the first stopper 136 and the first end alignment block 140. When the two opposite edges of one end of the metal lead L are completely processed by operations of the first notching molds 152, the first end alignment block 140 is returned by the operation of the first end alignment cylinder 138.

In case of aligning the lead tab T seated on the first alignment stage 132, the first side alignment blocks 142 may push the two opposite sides of the metal lead L toward the two opposite surfaces of the first alignment stage 132 and move the metal lead L so that a center of the metal lead L is coincident with a center of the first alignment stage 132.

In this case, the center of the first alignment stage 132 means an imaginary centerline that connects a center of one end and a center of the other end of the first alignment stage 132. Likewise, the center of the metal lead L means an imaginary centerline that connects a center of one end and a center of the other end of the metal lead L.

As illustrated, the first side alignment blocks 142 are disposed to face one side surface and the other side surface of the first alignment stage 132.

In this case, in the case of aligning the metal lead L seated on the first alignment stage 132, the first side alignment blocks 142 simultaneously approach one side surface and the other side surface of the first alignment stage 132, come into contact with one side and the other side of the metal lead L, push one side and the other side of the metal lead L, and move the metal lead L so that the center of the metal lead L is coincident with the center of the first alignment stage 132.

To this end, the first side alignment blocks 142 are respectively installed on first sliders 143 disposed with the first alignment stage 132 interposed therebetween. The first sliders 143 are slidably mounted on the upper surface of the first basal table 134.

As illustrated, the first sliders 143 are each provided in the form of a plate extending approximately vertically. Lower ends of the first sliders 143 are slidably mounted on first guide rails 144 installed on the upper surface of the first basal table 134 and extending in a longitudinal direction of the first basal table 134.

Further, a first servo motor 146 is installed on the first basal table 134 and disposed at one side of a rear side of the first sliders 143. The first servo motor 146 moves the first sliders 143 and the first side alignment blocks 142 installed on the first sliders 143.

In this case, a first screw shaft 148 is connected to the first servo motor 146 by means of a typical coupling and extends in the longitudinal direction of the first basal table 134.

Further, the first screw shaft 148 is divided into a first screw region 150a to which a rear side of one first slider 143 disposed adjacent to the first servo motor 146 is fastened, and a second screw region 150b to which a rear side of the other first slider 143 spaced apart from the first servo motor 146 is fastened. A screw thread of the first screw region 150a and a screw thread of the second screw region 150b extend in opposite directions so that the first sliders 143 and the first side alignment blocks 142 installed on the first sliders 143 may simultaneously move toward or away from one side surface and the other side surface of the first alignment stage 132 when the first screw shaft 148 rotates forward or reversely.

For example, the first screw region 150a may be a left-handed screw having a screw thread processed in the direction from the left side to the right side. The second screw region 150b may be a right-handed screw having a screw thread processed in the direction from the right side to the left side.

That is, in the case of aligning the metal lead L of the lead tab T seated on the first alignment stage 132, the first servo motor 146 rotates the first screw shaft 148 forward. In this case, the first sliders 143 and the first side alignment blocks 142 installed on the first sliders 143 simultaneously move toward one side surface and the other side surface of the first alignment stage 132, come into contact with one side and the other side of the metal lead L, push one side and the other side of the metal lead L, and move the metal lead L so that the center of the metal lead L is coincident with the center of the first alignment stage 132.

Further, when the two opposite edges of one end of the metal lead L are completely processed by the operations of the first notching molds 152, the first servo motor 146 rotates the first screw shaft 148 (reversely). In this case, the first sliders 143 and the first side alignment blocks 142 installed on the first sliders 143 simultaneously move away from one side surface and the other side surface of the first alignment stage 132.

Particularly, in case of aligning the metal lead L, the first side alignment blocks 142 come into contact with the two opposite sides of the metal lead L without interfering with the insulation film F.

The first notching molds 152 round the two opposite edges of one end of the metal lead L of the lead tab T completely aligned with the first alignment stage 132.

As illustrated, the first notching molds 152 are installed at front sides of the first sliders 143 that face the loading unit 120 without interfering with the first side alignment blocks 142 installed on the first sliders 143.

As can be seen by anyone, the first notching molds 152 include first die members 154 having dies (not illustrated) configured to round the edge of one end of the metal lead L, first punch members 156 having punches (not illustrated) configured to round the edge of one end of the metal lead L, and first hydraulic cylinders 158 configured to move the first punch members 156 upward or downward.

In this case, the first die members 154 are installed at front lower ends of the first sliders 143 and face lower sides of the two opposite edges of one end of the metal lead L aligned with the first alignment stage 132. The first punch members 156 are disposed on front surfaces of the first sliders 143 and move upward or downward toward the first die members 156 from positions above the metal lead L aligned with the first alignment stage 132.

Further, the first hydraulic cylinders 158 are fixedly installed at upper ends of the first sliders 143. The first hydraulic cylinders 158 are connected to the first punch members 156 and move the first punch members 156 upward or downward.

That is, when the metal lead L of the lead tab T seated on the first alignment stage 132 is completely aligned and the two opposite edges of one end of the metal lead L are placed on the first die members 154, the first hydraulic cylinders 158 move the first punch members 156 downward toward the first die members 154. Therefore, the dies of the first die members 154 and the punches of the first punch members 156 round the two opposite edges of one end of the metal lead L while intersecting one another. When the two opposite edges of one end of the metal lead L are rounded, the first hydraulic cylinders 158 move the first punch members 156 upward.

In this case, because the structures of the first die members 154 and the first punch members 156, which constitute the first notching molds 152, are publicly-known technologies, a detailed description thereof will be omitted.

The secondary edge processing unit 160 is installed at a downstream side of the primary edge processing unit 130. The secondary edge processing unit 160 aligns the lead tab T, which is transferred from the primary edge processing unit 130, i.e., the lead tab T, which has the two opposite edges of one end of the metal lead L that have been rounded, and rounds the two opposite edges of the other end of the metal lead L spaced apart from the insulation film F.

In this case, the secondary edge processing unit 160 and the primary edge processing unit 130 are mirror-symmetric with respect to an imaginary line vertically passing between the primary edge processing unit 130 and the secondary edge pressing unit 160.

The secondary edge processing unit 160 includes a second alignment stage 162, a second end alignment cylinder 168, a pair of second side alignment blocks 172, and a pair of first notching molds 182.

The lead tab T, which is transferred from the primary edge processing unit 130 by an operation of the third vacuum gripper 116, is seated on the second alignment stage 162 and aligned by the second alignment stage 162.

The second alignment stage 162 is installed at a center of an upper surface of the second basal table 164 extending in a direction perpendicularly intersecting the transfer direction of the lead tab T in a plan view.

In this case, the second alignment stage 162 has a flat, smooth upper surface on which the lead tab T is seated and slides. The second alignment stage 162 extends in the transfer direction of the lead tab T while having a width smaller than a width of the lead tab T.

Further, a second stopper 166 is installed to protrude from the upper surface of the second alignment stage 162 disposed adj acent to the unloading unit 190. The lead tab T seated on the upper surface of the second alignment stage 162 is aligned as the other end of the metal lead L comes into contact with the second stopper 166.

In case of aligning the lead tab T seated on the second alignment stage 162, the second end alignment cylinder 168 comes into contact with one end of the metal lead L and pushes the metal lead L toward the second stopper 166, such that one end and the other end of the metal lead L are aligned with the second alignment stage 162.

To this end, the second end alignment cylinder 168 is installed on the upper surface of the second basal table 164 and faces one end of the second alignment stage 162.

Further, a second end alignment block 170 is installed on the second end alignment cylinder 168 and moved in the transfer direction of the lead tab T by an operation of the second end alignment cylinder 168.

In case of aligning the lead tab T seated on the second alignment stage 162, the second end alignment block 170 comes into contact with one end of the metal lead L and pushes and moves the metal lead L by being moved toward one end of the second alignment stage 162 by the operation of the second end alignment cylinder 168 so that the other end of the metal lead L comes into contact with the second stopper 166.

That is, the other end and one end of the metal lead L of the lead tab T seated on the second alignment stage 162 are aligned by the second stopper 166 and the second end alignment block 170. When the two opposite edges of the other end of the metal lead L are completely processed by operations of the second notching molds 182, the second end alignment block 170 is returned by the operation of the second end alignment cylinder 168.

In case of aligning the lead tab T seated on the second alignment stage 162, the second side alignment blocks 172 may push the two opposite sides of the metal lead L toward the two opposite surfaces of the second alignment stage 162 and move the metal lead L so that a center of the second alignment stage 162 is coincident with a center of the metal lead L.

In this case, the center of the second alignment stage 162 means an imaginary centerline that connects a center of one end and a center of the other end of the second alignment stage 162. Likewise, the center of the metal lead L means an imaginary centerline that connects a center of one end and a center of the other end of the metal lead L.

As illustrated, the second side alignment blocks 162 are disposed to face one side surface and the other side surface of the second alignment stage 162.

In this case, in case of aligning the metal lead L seated on the second alignment stage 162, the second side alignment blocks 162 simultaneously approach one side surface and the other side surface of the second alignment stage 162, come into contact with one side and the other side of the metal lead L, push one side and the other side of the metal lead L, and move the metal lead L so that the center of the metal lead L is coincident with the center of the second alignment stage 162.

To this end, the second side alignment blocks 172 are respectively installed on the second sliders 173 disposed with the second alignment stage 162 interposed therebetween. The second sliders 173 are slidably mounted on the upper surface of the second basal table 164.

As illustrated, the second sliders 173 are each provided in the form of a plate extending approximately vertically. Lower ends of the second sliders 173 are slidably mounted on second guide rails 174 installed on the upper surface of the second basal table 164 and extending in a longitudinal direction of the second basal table 164.

Further, a second servo motor 176 is installed on the second basal table 164 and disposed at one side of a front side of the second sliders 173. The second servo motor 176 moves the second sliders 173 and the second side alignment blocks 172 installed on the second sliders 173.

In this case, a second screw shaft 178 is connected to the second servo motor 176 by means of a typical coupling and extends in the longitudinal direction of the second basal table 164.

Further, the second screw shaft 178 is divided into a first screw region 180a to which a front side of one second slider 173 disposed adj acent to the second servo motor 176 is fastened, and a second screw region 180b to which a front side of the other second slider 173 spaced apart from the second servo motor 176 is fastened. A screw thread of the first screw region 180a and a screw thread of the second screw region 180b extend in opposite directions so that the second sliders 173 and the second side alignment blocks 172 installed on the second sliders 173 may simultaneously move toward or away from one side surface and the other side surface of the second alignment stage 162 when the second screw shaft 178 rotates forward or reversely.

For example, the first screw region 180a may be a left-handed screw having a screw thread processed in the direction from the left side to the right side. The second screw region 180b may be a right-handed screw having a screw thread processed in the direction from the right side to the left side.

That is, in case of aligning the metal lead L of the lead tab T seated on the second alignment stage 162, the second servo motor 176 rotates the second screw shaft 178 forward. In this case, the second sliders 173 and the second side alignment blocks 172 installed on the second sliders 173 simultaneously move toward one side surface and the other side surface of the second alignment stage 162, come into contact with one side and the other side of the metal lead L, push one side and the other side of the metal lead L, and move the metal lead L so that the center of the metal lead L is coincident with the center of the second alignment stage 162.

Further, when the two opposite edges of one end of the metal lead L are completely processed by the operations of the second notching molds 182, the second servo motor 176 rotates the second screw shaft 178 reversely. In this case, the second sliders 173 and the second side alignment blocks 172 installed on the second sliders 173 simultaneously move away from one side surface and the other side surface of the second alignment stage 162.

Particularly, in case of aligning the metal lead L, the second side alignment blocks 172 come into contact with the two opposite sides of the metal lead L without interfering with the insulation film F.

The second notching molds 182 round the two opposite edges of the other end of the metal lead L of the lead tab T completely aligned with the second alignment stage 162.

As illustrated, the second notching molds 182 are installed at rear sides of the second sliders 173 that face the unloading unit 190 without interfering with the second side alignment blocks 172 installed on the second sliders 173.

As can be seen by anyone, the second notching molds 182 include second die members 184 having dies (not illustrated) configured to round the edge of the other end of the metal lead L, second punch members 186 having punches (not illustrated) configured to round the edge of the other end of the metal lead L, and second hydraulic cylinders 188 configured to move the second punch members 186 upward or downward.

In this case, the second die members 184 are installed at rear lower ends of the second sliders 173 and face lower sides of the two opposite edges of the other end of the metal lead L aligned with the second alignment stage 162. The second punch members 186 are disposed on rear surfaces of the second sliders 173 and move upward or downward toward the second die members 186 from positions above the metal lead L aligned with the second alignment stage 162.

Further, the second hydraulic cylinders 188 are fixedly installed at upper ends of the second sliders 173. The second hydraulic cylinders 188 are connected to the second punch members 186 and move the second punch members 186 upward or downward.

That is, when the metal lead L of the lead tab T seated on the second alignment stage 162 is completely aligned and the two opposite edges of the other end of the metal lead L are placed on the second die member 184, the second hydraulic cylinders 188 move the second punch members 186 downward toward the second die members 184. Therefore, the dies of the second die members 154 and the punches of the second punch member 186 round the two opposite edges of the other end of the metal lead L while intersecting one another. When the two opposite edges of the other end of the metal lead L are rounded, the second hydraulic cylinders 188 move the second punch members 186 upward.

In this case, because the structures of the second die members 184 and the second punch members 186, which constitute the second notching molds 182, are publicly-known technologies, a detailed description thereof will be omitted.

The unloading unit 190 is installed at a downstream side of the secondary edge processing unit 160. The unloading unit 190 loads the lead tab T, which is transferred from the secondary edge processing unit 160, i.e., the lead tab T, which has the two opposite edges of one end and the two opposite edges of the other end of the metal lead T that have been rounded, and discharges the loaded lead tab T to the outside.

The unloading unit 190 includes an unloading table 192 configured to load the lead tab T transferred from the secondary edge processing unit 160 and discharge the lead tab T to the outside.

As illustrated, the unloading table 192 is provided in the form of a horizontal circular plate having a predetermined thickness.

In this case, the unloading table 192 is supported to be rotatable by a rotary motor 194 installed on a center of a lower portion of the unloading table 192.

Meanwhile, a plurality of trays 196 is installed on an upper surface of the unloading table 192, and the lead tab T, which is transferred from the secondary edge processing unit 160 by an operation of the fourth vacuum gripper 118, is inserted and loaded into the tray.

As illustrated, the trays 196 are installed on the upper surface of the unloading table 192 and spaced apart from one another at equal angular intervals. The rotary motor 194 rotates the unloading table 192 so that the trays 196 installed to be spaced apart from one another at equal angular intervals sequentially face the rear surface of the secondary edge processing unit 160.

Particularly, the tray 196 accommodates one lead tab T or two or more lead tabs T.

The processing apparatus 100 for rounding an edge of a lead tab for a secondary battery according to the present disclosure configured as described above may automatically and continuously round the two opposite edges of one end and the two opposite edges of the other end of the metal lead L having the two opposite surfaces to which the insulation film F is fused.

## Claims

1. A processing apparatus for rounding an edge of a lead tab for a secondary battery, which rounds two opposite edges of one end and two opposite edges of the other end of a metal lead of a lead tab manufactured by a lead tab manufacturing apparatus, the processing apparatus comprising:
a loading unit on which the lead tab manufactured by the lead tab manufacturing apparatus is loaded and seated;
a primary edge processing unit installed at a downstream side of the loading unit and configured to align the lead tab transferred from the loading unit, the primary edge processing unit being configured to round the two opposite edges of one end of the metal lead disposed adjacent to an insulation film;
a secondary edge processing unit installed at a downstream side of the primary edge processing unit and configured to align the lead tab transferred from the primary edge processing unit, the secondary edge processing unit being configured to round the two opposite edges of the other end of the metal lead spaced apart from the insulation film;
an unloading unit installed at a downstream side of the secondary edge processing unit and configured to load the lead tab transferred from the secondary edge processing unit and discharge the loaded lead tab to the outside; and
a transfer unit configured to load the lead tab, which has the two opposite edges of one end and the two opposite edges of the other end of the metal lead that are to be processed, from the lead tab manufacturing apparatus to the loading unit and transfer the lead tab, which is loaded on the loading unit, to the primary edge processing unit, the secondary edge processing unit, and the unloading unit.

2. The processing apparatus of claim 1, wherein the transfer unit comprises:
a first vacuum gripper configured to transfer the lead tab, which is manufactured by the lead tab manufacturing apparatus, to the loading unit;
a second vacuum gripper configured to transfer the lead tab, which is loaded on the loading unit, to the primary edge processing unit;
a third vacuum gripper configured to transfer the lead tab, which has the two opposite edges of one end of the metal lead that have been processed by the primary edge processing unit, to the secondary edge processing unit; and
a fourth vacuum gripper configured to transfer the lead tab, which has the two opposite edges of the other end of the metal lead that have been processed by the secondary edge processing unit, to the unloading unit.

3. The processing apparatus of claim 1, wherein the loading unit comprises:
a station table on which the lead tab, which is transferred from the lead tab manufacturing apparatus by an operation of a first vacuum gripper of the transfer unit, is loaded and seated; and
a vision camera installed to face an upper surface of the station table and configured to identify a seated state of the lead tab by acquiring an image of the lead tab seated on the station table.

4. The processing apparatus of claim 1, wherein the primary edge processing unit comprises:
a first alignment stage on which the lead tab, which is transferred from the loading unit by an operation of a second vacuum gripper of the transfer unit, is seated and aligned, the first alignment stage having a first stopper installed to protrude from one end of the first alignment stage facing the loading unit, the first stopper being configured to come into contact with one end of the metal lead in case of aligning the lead tab;
a first end alignment cylinder configured to align one end and the other end of the metal lead with the first alignment stage by coming into contact with the other end of the metal lead and pushing the metal lead toward the first stopper in case of aligning the lead tab seated on the first alignment stage;
a pair of first side alignment blocks configured to push two opposite sides of the metal lead toward two opposite surfaces of the first alignment stage and move the metal lead so that a center of the first alignment stage is coincident with a center of the metal lead in case of aligning the lead tab seated on the first alignment stage; and
a pair of first notching molds configured to round the two opposite edges of one end of the metal lead of the lead tab that has been completely aligned with the first alignment stage.

5. The processing apparatus of claim 4, wherein the first alignment stage is installed at a center of an upper surface of a first basal table extending in a direction perpendicularly intersecting a transfer direction of the lead tab in a plan view,
wherein the first alignment stage includes an upper surface on which the lead tab is seated and aligned, and
wherein the first alignment stage extends in the transfer direction of the lead tab while having a width smaller than a width of the lead tab.

6. The processing apparatus of claim 5, wherein the first end alignment cylinder is installed on the upper surface of the first basal table and faces the other end of the first alignment stage,
wherein a first end alignment block is installed on the first end alignment cylinder, and
wherein the first end alignment block comes into contact with the other end of the metal lead and pushes and moves the metal lead by being moved toward the other end of the first alignment stage by an operation of the first end alignment cylinder so that one end of the metal lead comes into contact with the first stopper in case of aligning the lead tab.

7. The processing apparatus of claim 5, wherein the first side alignment blocks are installed on first sliders disposed with the first alignment stage interposed therebetween and configured to face one side surface and the other side surface of the first alignment stage,
wherein the first sliders are slidably mounted on the upper surface of the first basal table, and
wherein the first side alignment blocks simultaneously approach one side surface and the other side surface of the first alignment stage, come into contact with one side and the other side of the metal lead, push one side and the other side of the metal lead, and move the metal lead so that the center of the metal lead is coincident with the center of the first alignment stage in case of aligning the metal lead seated on the first alignment stage.

8. The processing apparatus of claim 7, wherein the first sliders are each provided in the form of a plate extending vertically,
wherein lower ends of the first sliders are slidably mounted on first guide rails installed on the upper surface of the first basal table and extending in a longitudinal direction of the first basal table,
wherein a first servo motor is installed on the first basal table and disposed at one side of a rear side of the first sliders and moves the first sliders and the first side alignment blocks installed on the first sliders,
wherein a first screw shaft is connected to the first servo motor and extends in the longitudinal direction of the first basal table,
wherein the first screw shaft is divided into a first screw region to which a rear side of one first slider disposed adjacent to the first servo motor is fastened, and a second screw region to which a rear side of the other first slider spaced apart from the first servo motor is fastened, and
wherein a screw thread of the first screw region and a screw thread of the second screw region extend in opposite directions.

9. The processing apparatus of claim 8, wherein the first notching molds are installed on the first sliders, respectively,
wherein the first notching molds each comprise:
a first die member having a die configured to round the edge of one end of the metal lead;
a first punch member having a punch configured to round the edge of one end of the metal lead; and
a first hydraulic cylinder configured to move the first punch member upward or downward,
wherein the first die members are installed at front lower ends of the first sliders and face lower sides of the two opposite edges of one end of the metal lead aligned with the first alignment stage,
wherein the first punch members are disposed on front surfaces of the first sliders and move upward or downward toward the first die members from positions above the metal lead aligned with the first alignment stage,
wherein the first hydraulic cylinder are fixedly installed at upper ends of the first sliders, and
wherein the first hydraulic cylinder are connected to the first punch members and move the first punch members upward or downward.

10. The processing apparatus of claim 1, wherein the secondary edge processing unit comprises:
a second alignment stage on which the lead tab, which is transferred from the primary edge processing unit by an operation of a third vacuum gripper of the transfer unit, is seated and aligned, the second alignment stage having a second stopper installed to protrude from the other end of the second alignment stage facing the unloading unit, the second stopper being configured to come into contact with the other end of the metal lead in case of aligning the lead tab;
a second end alignment cylinder configured to align the other end and one end of the metal lead with the second alignment stage by coming into contact with one end of the metal lead and pushing the metal lead toward the second stopper in case of aligning the lead tab seated on the second alignment stage;
a pair of second side alignment blocks configured to push two opposite sides of the metal lead toward two opposite surfaces of the second alignment stage and move the metal lead so that a center of the second alignment stage is coincident with a center of the metal lead in case of aligning the lead tab seated on the second alignment stage; and
a pair of second notching molds configured to round the two opposite edges of the other end of the metal lead of the lead tab that has been completely aligned with the second alignment stage.

11. The processing apparatus of claim 10, wherein the second alignment stage is installed at a center of an upper surface of a second basal table extending in a direction perpendicularly intersecting a transfer direction of the lead tab in a plan view,
wherein the second alignment stage includes an upper surface on which the lead tab is seated and aligned, and
wherein the second alignment stage extends in the transfer direction of the lead tab while having a width smaller than a width of the lead tab.

12. The processing apparatus of claim 11, wherein the second end alignment cylinder is installed on the upper surface of the second basal table and faces one end of the second alignment stage,
wherein a second end alignment block is installed on the second end alignment cylinder, and
wherein the second end alignment block comes into contact with one end of the metal lead and pushes and moves the metal lead by being moved toward one end of the second alignment stage by an operation of the second end alignment cylinder so that the other end of the metal lead comes into contact with the second stopper in case of aligning the lead tab.

13. The processing apparatus of claim 11, wherein the second side alignment blocks are installed on second sliders disposed with the second alignment stage interposed therebetween and configured to face one side surface and the other side surface of the second alignment stage,
wherein the second sliders are slidably mounted on the upper surface of the second basal table, and
wherein the second side alignment blocks simultaneously approach one side surface and the other side surface of the second alignment stage, come into contact with one side and the other side of the metal lead, push one side and the other side of the metal lead, and move the metal lead so that the center of the metal lead is coincident with the center of the second alignment stage in case of aligning the metal lead seated on the second alignment stage.

14. The processing apparatus of claim 13, wherein the second sliders are each provided in the form of a plate extending vertically,
wherein lower ends of the second sliders are slidably mounted on second guide rails installed on the upper surface of the second basal table and extending in a longitudinal direction of the second basal table,
wherein a second servo motor is installed on the second basal table and disposed at one side of a front side of the second sliders and moves the second sliders and the second side alignment blocks installed on the second sliders,
wherein a first screw shaft is connected to the second servo motor and extends in the longitudinal direction of the second basal table,
wherein the second screw shaft is divided into a first screw region to which a front side of one second slider disposed adjacent to the second servo motor is fastened, and a second screw region to which a front side of the other second slider spaced apart from the second servo motor is fastened, and
wherein a screw thread of the first screw region and a screw thread of the second screw region extend in opposite directions.

15. The processing apparatus of claim 14, wherein the second notching molds are installed on the second sliders, respectively,
wherein the second notching molds each comprise:
a second die member having a die configured to round the edge of the other end of the metal lead;
a second punch member having a punch configured to round the edge of the other end of the metal lead; and
a second hydraulic cylinder configured to move the second punch member upward or downward,
wherein the second die members are installed at rear lower ends of the second sliders and face lower side of the two opposite edges of the other end of the metal lead aligned with the second alignment stage,
wherein the second punch members are disposed on rear surfaces of the second sliders and move upward or downward toward the second die members from positions above the metal lead aligned with the second alignment stage,
wherein the second hydraulic cylinders are fixedly installed at upper ends of the second sliders, and
wherein the second hydraulic cylinders are connected to the second punch members and move the second punch members upward or downward.

16. The processing apparatus of claim 1, wherein the unloading unit comprises:
an unloading table provided in the form of a horizontal circular plate and configured to load the lead tab, which is transferred from the secondary edge processing unit by an operation of a fourth vacuum gripper of the transfer unit, and discharge the lead tab to the outside; and
a rotary motor installed at a center of a lower portion of the unloading table and configured to rotate the unloading table,
wherein a plurality of trays is installed on an upper surface of the unloading table,
wherein the lead tab transferred from the secondary edge processing unit is inserted and loaded into the tray, and
wherein the trays are installed on the upper surface of the unloading table and spaced apart from one another at equal angular intervals.
